# EUROPÄISCHE PATENTSCHRIFT

(11) **EP 0 792 846 B1**
(45) Veröffentlichungstag und Bekanntmachung des Hinweises auf die Patenterteilung: **11.08.2004**
(21) Anmeldenummer: 97101512.8
(22) Anmeldetag: 31.01.1997
(51) Int. Cl.: C03C 17/00, C09C 1/30, C09C 1/40

(54) **Barriereschichten**
Barrier layers
Couches d'étanchéité

(30) Priorität: 28.02.1996 DE 19607524; 04.12.1996 DE 19650286
(43) Veröffentlichungstag der Anmeldung: 03.09.1997
(73) Patentinhaber: Fraunhofer-Gesellschaft zur Förderung der angewandten Forschung e.V., 80686 München (DE)
(72) Erfinder: Utz, Helmar, Dr., 3425 Koppigen (CH); Amberg-Schwab, Sabine, Dr., 97250 Erlabrunn (DE); Schottner, Gerhard, Dipl.-Chem., 91560 Heilsbronn (DE)
(74) Vertreter: Pfenning, Meinig & Partner

(56) Entgegenhaltungen:
- EP-A- 0 526 875
- EP-A- 0 533 074
- EP-A- 0 754 737
- JP-A- 5 331 417
- JP-A- 6 240 208
- JP-A- 6 279 678
- US-A- 3 785 845
- US-A- 3 793 105
- US-A- 4 015 050
- US-A- 5 395 954
- US-A- 5 409 609
- US-A- 5 618 628
- NEW JOURNAL OF CHEMISTRY, Bd. 18, Nr. 10, 1.Oktober 1994, Seiten 1117-1123, XP000565835 KASEMANN R ET AL: "COATINGS FOR MECHANICAL AND CHEMICAL PROTECTION BASED ON ORGANIC-INORGANIC SOL-GEL NANOCOMPOSITES"

## Beschreibung

Die Erfindung betrifft die Verwendung eines Verbundsystems aus einem Trägermaterial und einer darauf aufgebrachten Polymerbeschichtung als Barrierematerial gegenüber Wasserdampf und Gaspermeation. Derartige Verbundsysteme können beispielsweise im Verpackungsbereich (z.B. in Form von Folien, Platten oder Form- und Hohlkörpern) aber auch für technische Anwendungen (z.B. als Membranen oder Schutzschichten für Sensoren) eingesetzt werden.

Gegenwärtig werden als Barrierematerialien zumeist Metalle (z.B. Aluminium oder Weißblech), Glas, Polymere (z.B. EVOH oder PVDC), mit dünnen metallischen oder oxidischen Schichten bedampfte Polymere oder entsprechende Materialkombinationen eingesetzt. Polymere zeichnen sich gegenüber Glas und Metallen durch ihr geringes Gewicht und durch die geringen benötigten Materialmengen aus, weswegen sie vor allem im Verpackungsbereich vielfach Einsatz finden. Andererseits eignen sich Polymere aufgrund ihres strukturellen Aufbaus und der damit verbundenen Permeabilität für Gase und Wasserdampf nicht für Anwendungen, die besonders hohe Anforderungen bezüglich der Barriereeigenschaften stellen. Insbesondere die unter ökologischen Gesichtspunkten zunehmend an Bedeutung gewinnenden nachwachsenden Polymere weisen eine vergleichsweise hohe Gasdurchlässigkeit und äußerst unzureichende Sperreigenschaften gegenüber Wasserdampf auf. Ihnen bleiben deshalb viele Anwendungsbereiche verschlossen.

Aufgrund der meist ungenügenden Sperrwirkung gegenüber Gasen und Wasserdampf werden Polymere oft im Verbund mit anderen Materialen eingesetzt. So lassen sich beispielsweise durch das Aufbringen dünner Schichten aus Aluminium, Aluminiumoxid oder Siliziumoxid die Barriereeigenschaften von Polymeren zwar erheblich verbessern, die Permeationsraten bleiben aber für viele Anwendungen weiterhin zu hoch und können mit konventioneller Meßtechnik erfaßt werden (Sauerstoffdurchlässigkeit > 0.05 cm³/(m² d bar)). Darüber hinaus weisen nachwachsende Polymere auch nach der Beschichtung im Vergleich zu beschichteten Standardpolymeren wie beispielsweise Polyethylen oder Polypropylen um ein Vielfaches höhere Permeationsraten auf. Da die aufgedampften Schichten sehr empfindlich gegenüber mechanischen Beanspruchungen sind, ist es zumeist erforderlich, die beschichteten Substrate beispielsweise mit einer Folie zu kaschieren.

Seit längerer Zeit ist es bekannt, kratzfeste Beschichtungsmaterialien durch hydrolytische Polykondensation eines organofunktionellen Silans z.B. mit einer Aluminiumverbindung und gegebenenfalls anorganischen Oxidkomponenten herzustellen (z.B. DE OS 38 28 098 A1). Derart synthetisierte Hybridpolymere (sog. ORMOCERe) weisen sowohl anorganische wie auch organische Netzwerkstrukturen auf. Der Aufbau der anorganischen silikatischen Netzwerkstruktur erfolgt im Sol-Gel-Prozeß (z. B. C. J. Brinker, G. W. Scherer, Sol-Gel-Science; The physics and chemistry of Sol-Gel-Processing, Academic Press, Inc., New York, 1989) über die gesteuerte Hydrolyse und Kondensation von Alkoxysilanen. Indem zusätzlich Metallalkoxide in den Sol-Gel-Prozeß einbezogen werden, läßt sich das silikatische Netzwerk gezielt modifizieren. Durch Polymerisation von organofunktionellen Gruppen, welche durch die organoalkoxylane in das Material eingebracht werden, wird zusätzlich ein organisches Netzwerk aufgebaut. Reaktive Methacrylat-, Epoxy- oder Vinylgruppen werden durch thermische oder photochemische Induktion polymerisiert. Die auf diese weise hergestellten ORMOCERe können mittels herkömmlicher Applikationstechniken (Sprühen, Streichen, usw.) auf das zu beschichtende Medium aufgetragen werden. Trotz brauchbarem Benetzungsverhalten und guter Schichthaftung kann auch durch einen Verbund aus einer ORMOCER-Schicht und einer Polymerfolie die hohe Permeabilität vieler Polymere und insbesondere nachwachsender Polymere nicht in dem Maße reduziert werden, wie es beispielsweise bei der Verpackung von Lebensmitteln erforderlich wäre.

Der vorliegenden Erfindung liegt daher die Aufgabe zugrunde, ein eine Polymerbeschichtung auf einem Trägermaterial enthaltendes Verbundmaterial, das eine hohe Sperrwirkung gegenüber Gas- und Wasserdampfpermeation aufweist, zu verwenden.

Diese Aufgabe wird erfindungsgemäß durch die Verwendung von Verbundsystemen mit den in Anspruch 1 angegebenen kennzeichnenden Merkmalen.

Vorteilhafte Ausgestaltungen von erfindungsgemäßen Verwendungen dieser Verbundsysteme ergeben sich aus den Unteransprüchen.

Die Verwendung eines Verbundsystems basierend auf einem Trägermaterial, auf welchem gemäß Anspruch 1 in beliebiger Reihenfolge mindestens zwei Schichten angeordnet sind, von denen mindestens eine Barriereschicht anorganisch-organischen Hybridpolymere enthält (ORMOCER-Schicht) und mindestens eine weitere Schicht Trägermaterial oder anderes Barrierematerial enthält, führt im Vergleich zum ursprünglichen Trägermaterial oder zum einfach beschichteten Trägermaterial eine um ein Vielfaches geringere Permeabilität auf.

Die erfindungsgemäße Verwendung von solchen Verbundsystemen erzielt eine hohe Sperrwirkung gegenüber Gasen und Wasserdampf. Insbesondere können überraschenderweise selbst die Permeationsraten von nativen Polymeren in einem solchen Maße reduziert werden, daß diese sich gegenüber Gasen und Wasserdampf als weitestgehend undurchlässig erweisen. Nativen Polymeren werden somit neue Einsatzgebiete erschlossen.

Wird eine 1 µm bis 15 µm dicke ORMOCER-Schïcht auf ein mit einer ein Metall und/oder ein Metalloxid und/oder einen Halbleiter enthaltenden Barriereschicht beschichtetes Trägermaterial aufgebracht und erfindungsgemäß verwendet, so lässt sich neben der Barrierewirkung des Verbundsystems auch die mechanische Stabilität der zuerst applizierten Schichten drastisch verbessern. Die ORMOCER-Schicht übernimmt somit gleichzeitig die Funktion einer mechanischen Schutzschicht, welche weitere Verfahrensschritte wie Lackieren oder Kaschieren überflüssig machen kann. Aus diesem Grund wird es sich zumeist als zweckmäßig erweisen, die ORMOCER-Schicht als abschließende Schicht auf das bereits anderweitig beschichtete Trägermaterial aufzubringen.

Selbstverständlich ist es auch möglich, eine direkt auf das Trägermaterial aufgebrachte ORMOCER-Schicht erfindungsgemäß zu verwenden. Anschließend können weitere Barriereschichten (z.B. eine Siliziumoxidschicht) und/oder eine weitere Trägermaterialschicht appliziert werden. So können für die erfindungsgemäße Verwendung beispielsweise die Siliziumoxid-Seiten zweier beschichteter Trägermaterialien oder die Siliziumoxid-Seite eines beschichteten und ein unbeschichtetes Trägermaterial auf einer konventionellen Kaschieranlage mit ORMOCER als Kaschierkleber kombiniert werden.

Überraschenderweise erzielt aber auch bereits die Verwendung eines Verbundes aus zwei Trägermaterialien, beispielsweise Polymerfolien, zwischen welchen eine ORMOCER-Barriereschicht angeordnet ist, hervorragende Sperreigenschaften. Die ORMOCER-Schicht kann auch in diesem Fall als Kaschierkleber dienen.

Werden die Sperreigenschaften von Polymeren durch das Aufbringen einer 100 nm dünnen Barrierschicht aus Siliziumoxid im Durchschnitt um einen Faktor 100 verbessert, so nehmen die Sperreigenschaften dieses Verbundsystems nach der zusätzlichen Applikation und Aushärtung einer ORMOCER-Schicht erstaunlichweise nochmals um einen Faktor 100 zu. Dieser Sachverhalt verdeutlicht, welche Bedeutung gerade der Verwendung eines zweischichtigen Auftrags zukommt.

Anstelle der Siliziumoxidschicht können auch Metallschichten wie beispielsweise Schichten aus Aluminium oder anderen, aus dem Stand der Technik bekannten Beschichtungsmetallen und/oder Halbleiterschichten wie beispielsweise Schichten aus Silizium und/oder Metalloxidschichten wie beispielsweise Aluminiumoxide, Magnesiumoxide, Ceroxide, Hafniumoxide, Tantaloxide, Titanoxide wie Titandioxid, Titan(3)oxid oder Titanmonoxid, Yttriumoxide oder Zirkonoxide wie Zirkonmonoxid sowie Mischungen dieser Substanzen enthaltende Barriereschichten verwendet werden. Die Metall und/oder Metalloxid- und/oder Halbleiterschichten weisen typischerweise eine Dicke von 5 nm bis 1000 nm, bevorzugt zwischen 20 nm und 150 nm, auf.

Als Trägermaterialien in Verbundsystemen, die der erfindungsgemäßen Verwendung dienen, bieten sich sämtliche Polymere (z.B. Polyamid, Polyethylen, Polypropylen oder Polyester) an. Insbesondere kommen biologisch abbaubare Polymere und vor allem native Polymere (Zellglas, eiweiß- oder stärkehaltige Polymere) mit inhärent geringer Barrierewirkung als Trägermaterialien in Frage. Auch Papier, Pappe, beschichtetes Papier oder beschichtete Pappe sind als Trägermaterialien geeignet. Beschichtungen, die gemäß der Erfindung verwendet werden, erzielen bei dünnen Trägermaterialien (z.B. Folien) mit Dicken im Bereich von ungefähr 5 µm bis 2 mm besonders ausgeprägte Verbesserungen hinsichtlich der Gas- und Wasserdampfdurchlässigkeit. Als Trägermaterialien kommen aber neben Folien auch Platten, Formkörper, Hohlkörper, Membranen oder Schutzschichten für Sensoren in Frage.

Durch die Verwendung siegelfähiger Trägerschichten oder das Aufbringen siegelfähiger Schichten auf die Verbundsysteme kann eine Versiegelbarkeit der Verbundsysteme gewährleistet werden. Ein Beispiel hierfür wäre eine auf Polypropylen koextrudierte Kopolymerschicht. Die Siegelfähigkeit ist vor allem bei der Verpackung von Lebensmitteln von großer Bedeutung. Auch der Einsatz von orientierten Polymeren, beispielsweise von axial oder biaxial orientiertem Polypropylen, hat sich als vorteilhaft erwiesen.

Mit der erfindungsgemäßen Verwendung von beschichteten Kunststoffen, insbesondere nativen Polymeren, eröffnen sich eine große Anzahl neuer Anwendungsgebiete, welche Kunststoffen bislang verschlossen blieben (z.B. Konserven für Lebensmittel). In vielen Bereichen könnte Metall oder Glas durch derart beschichtete Kunststoffe substituiert werden, was eine drastische Gewichtsersparnis bedeutet. Des weiteren lassen sich durch derart beschichtete Kunststoffe im Gegensatz zu Metallen transparente Barrierematerialien herstellen. Auch ist die Realisierung eines siegelfähigen, nahezu sortenreinen Barrierenverbundes möglich (vgl. Ausführungsbeispiel 5).

Durch Art und Anteil des organischen und des anorganischen Netzwerkes sowie über die Netzwerkwandler lassen sich die Barriereeigenschaften des ORMOCERs gezielt einstellen. Auf diese Weise können sowohl Benetzungsverhalten und Schichthaftung wie auch die Sperreigenschaften optimiert werden. Die Dicke der applizierten ORMOCER-Schicht beträgt typischerweise 1 µm bis 15 µm. Die erfindungsgemäße Verwendung von Polymerschichten umfasst alle bisher im Stand der Technik bekannten ORMOCERe. Auf den Offenbarungsgehalt der DE OS 38 28 098 sowie der DE 43 03 570 wird ausdrücklich Bezug genommen.

Die zusätzliche Beigabe funktionalisierter SiO₂-Partikel, welche während der ORMOCERSynthese eingearbeitet und kovalent an das organische Netzwerk angebunden werden, führt zu einer höheren Dichte des anorganischen Netzwerkes. Anstelle von SiO₂-Partikeln können auch andere Partikel, beispielsweise funktionalisierte Al₂O₃-Partikel, eingesetzt werden. Die Sperreigenschaften des Verbundsystems lassen sich auf diese Weise noch weiter verbessern, so dass solche Systeme eine bevorzugte erfindungsgemäße Verwendung darstellen.

Der erfindungsgemäßen Verwendung dienende Verbundsysteme mit Barriereeigenschaften lassen sich herstellen, indem mindestens zwei Schichten auf ein Trägermaterial aufgebracht werden, wobei mindestens eine dieser Schichten eine ORMOCERe enthaltende Barriereschicht ist, welche durch Streich-, Sprüh-, Walz-, Schleuder- oder Rakelverfahren aufgebracht und anschließend durch Wärme und/oder photochemische Induktion und/oder thermische Induktion ausgehärtet wird, und mindestens eine weitere Schicht aus einem anderen Barrierematerial oder aus einem Trägermaterial vor oder nach dem Aufbringen der mindestens einen ORMOCER-Schicht appliziert wird.

Weitere Einzelheiten, Merkmale und Vorteile der vorliegenden Erfindung ergeben sich aus den nachfolgenden Ausführungsbeispielen und anhand der Zeichnungen.

Es zeigen:
- Fig. 1: die vereinfachte Darstellung eines aminofunktionalisierten SiO₂-Partikels
- Fig. 2: ein Ausführungsbeispiel einer Polymerfolie mit einer aufgedampften SiOₓ-Schicht und einer ORMOCER-Schutzschicht
- Fig. 3: ein Ausführungsbeispiel eines siegelbaren Verbunds, bestehend aus zwei Polymerfolien mit aufgedampften SiOₓ-Schichten und einer ORMOCER-Schicht als Kaschierkleber
- Fig. 4: ein Ausführungsbeispiel eines Folienverbunds aus zwei Polymerfolien, zwischen welchen eine ORMOCER-Schicht als Kaschierkleber angeordnet ist.

Nachfolgend wird die beispielhafte Zusammensetzung zweier geeigneter ORMOCER-Lacke beschrieben.

### Beschichtungsmaterial 1

| | |
|---|---|
| 40 mol-% TMOS, | 12,5 mol-% Al(OBu^{s})₃ |
| 32,5 mol-% GLYMO, | 10 mol-% Zr(OPr)₄ |
| 5 mol-% AMEO | |

Dieses Lacksystem wird thermisch bei 130°C ausgehär tet.

### Beschichtungsmaterial 2

| | |
|---|---|
| 70 mol-% MEMO, | 15 mol-% Methacrylsäure |
| 15 mol-% Zr(OPr)₄ | |

Dieses Lacksystem wird durch photochemische oder thermische Induktion ausgehärtet

### Abkürzungen:

| | |
|---|---|
| TMOS | Tetramethoxysilan |
| GLYMO | 3-Glycidoxypropyltrimethoxysilan |
| AMEO | 3-Aminoprpyltriethoxysilan |
| MEMO | 3-Methacryloxypropyltrimethoxysilan |
| Al(OBu^{s})₃ | Aluminiumtrisekundärbutylat |
| Zr(OPr)₄ | Zirkontetrapropylat |
| BOPP | biaxial orientiertes Polypropylen |
| PETP | Polyethylentheraptalat |

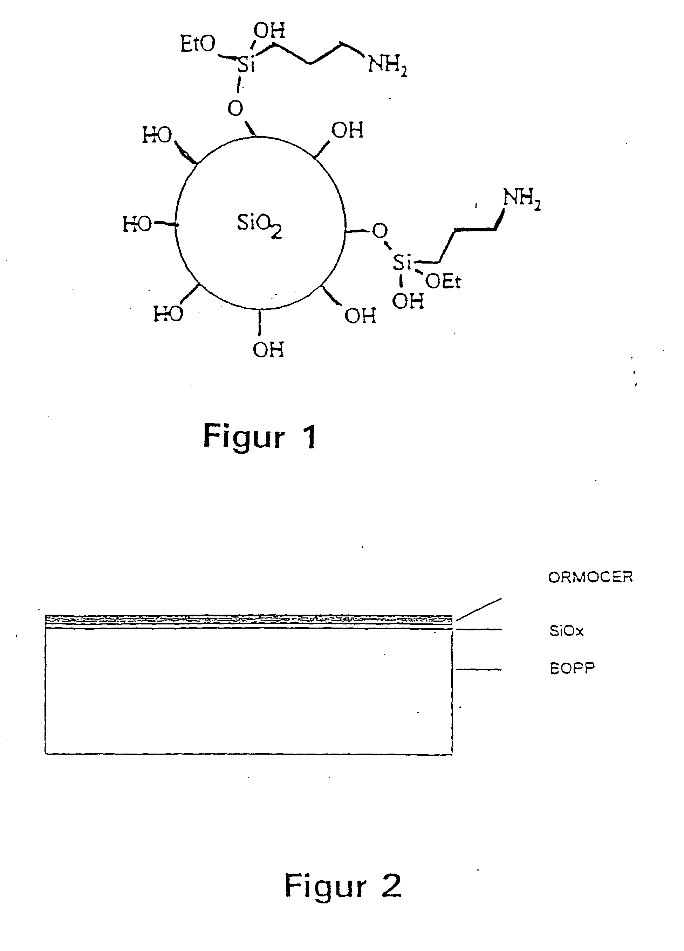

In beide Systeme können zur weiteren Verbesserung der Sperreigenschaften während der Lacksynthese zusätzlich ungefähr 1 Massen-% aminofunktionalierte (Fig. 1) oder methacrylatfunktionalisierte SiO₂-Partikel der Firma Degussa (Aerosil 200) eingearbeitet werden.

Nachfolgend werden einige Ausführungsbeispiele für erfindungsgemäße Verbundsysteme mit Barriereeigenschaften die für die erfindungsgemäße Verwendung geeignet sind, beschrieben. Die Siliziumoxidschichten werden z.B. durch Verdampfen von Siliziummonoxid oder mittels Plasma-CVD (chemical vapor deposition) aufgebracht. ORMOCERe können durch konventionelle Lackierverfahren wie beispielsweise Sprühen, Streichen, Walzen oder Schleudern appliziert werden, in den Ausführungsbeispielen kann die Beschichtung mittels einer Rasterwalze erfolgen. Die applizierten ORMOCER-Lacke werden vorzugsweise inline, z.B. durch Wärme oder photochemische Induktion, ausgehärtet.

### Ausführungsbeispiel 1

Zunächst wird eine etwa 100 nm dicke SiOₓ-Schicht auf eine etwa 20 µm dicke, siegelfähige BOPP-Folie aufgedampft. Anschließend wird die SiOₓ-Schicht mit etwa 3 g/m² ORMOCER überlackiert und ausgehärtet (Fig. 2). Die Ausgangsfolie weist bei 23°C und etwa 75 % r.F. eine Sauerstoffdurchlässigkeit von etwa 30 cm³/(m² d bar) auf. Die Sauerstoffdurchlässigkeit der zusätzlich mit ORMOCER beschichteten Folie beträgt < 1 cm³/(m² d bar). Die Folie kann als eine siegelfähige Hochbarriere-Verpackungsfolie verwendet werden.

### Ausführungsbeispiel 2

Zunächst wird eine etwa 100 nm dicke SiOₓ-Schicht auf eine etwa 12 µm dicke PETP-Folie aufgedampft. Anschließend wird die SiOₓ-Schicht mit etwa 3 g/m² ORMOCER überlackiert und ausgehärtet. Die Ausgangsfolie weist bei 23 °C und etwa 75 % r.F. eine Sauerstoffdurchlässigkeit von etwa 2 cm³/(m² d bar) auf. Die Sauerstoffdurchlässigkeit der zusätzlich mit ORMOCER beschichteten Folie ist mit handelsüblichen Durchlässigkeitsmeßgeräten nicht mehr erfaßbar, d.h. sie beträgt < 0,05 cm³/(m² d bar). Die Folie könnte nach Auftragen eines Siegellacks oder nach Kaschieren gegen z.B. eine Polyethylenfolie als Hochbarriere-Verpackungsfolie verwendet werden.

### Ausführungsbeispiel 3

Zunächst wird eine etwa 100 nm dicke SiO^{x}-Schicht auf eine etwa 20 µm dicke Zellglas-Folie aufgedampft. Anschließend wird die SiO^{x}-Schicht mit etwa 3 g/m² ORMOCER überlackiert und ausgehärtet (Fig. 2). Die Ausgangsfolie weist bei 23°C und einem Feuchtegefälle von 0 bis 85 % r.F. eine Wasserdampfdurchlässigkeit von etwa 20 g/(m² d) auf. Die Wasserdampfdurchlässigkeit der zusätzlich mit ORMOCER beschichteten Folie beträgt etwa 0,5 g/(m² d). Die Wasserdampfdurchlässigkeit ist damit so gering, daß sie im Gegensatz zu allen bisher bekannten Folien aus nachwachsenden Rohstoffen auch zum Verpacken von sehr feuchteempfindlichen Füllgütern verwendet werden kann.

### Ausführungsbeispiel 4

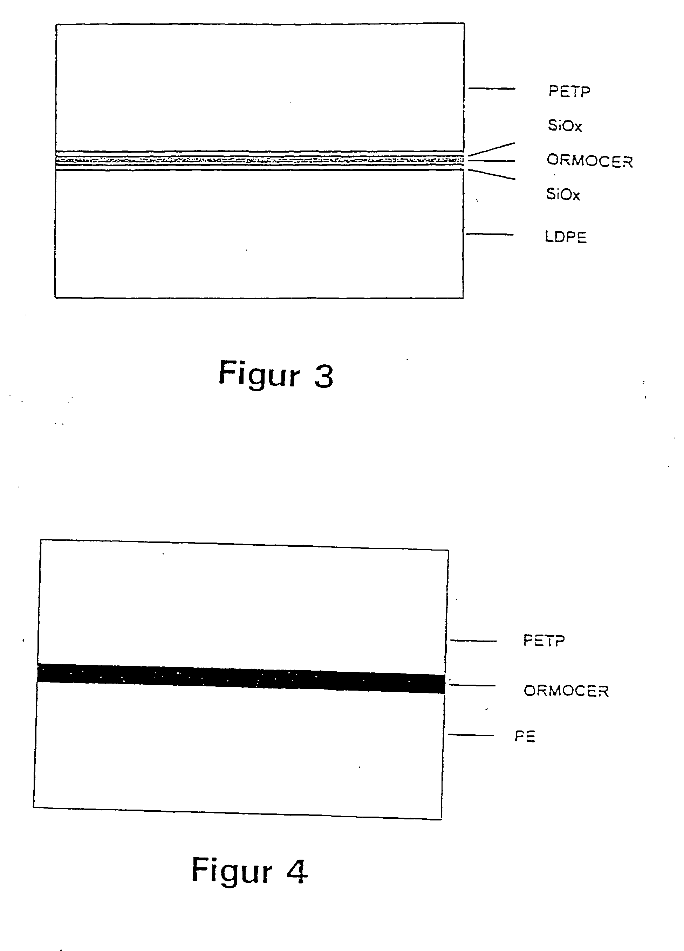

Die beschichteten Seiten zweier mit SiOₓ bedampfter Folien (eine 12 µm dicke PETP-Folie und eine 60 µm dicke LDPE-Folie) werden mit ORMOCER als Kaschierkleber auf einer konventionellen Kaschieranlage verklebt (Fig. 3). Der so erhaltene Verbund weist eine Sauerstoffdurchlässigkeit von < 0,05 cm³/(m² d bar) auf, ist siegelfähig und kann z.B. zum Verpacken von Lebensmitteln verwendet werden.

Zur Realisierung eines Barriereverbundsystems mit guten Sperreigenschaften ist es ausreichend, unbeschichtete Polymerfolien, beispielsweise aus PP, PE, oder PET, mit ORMOCERen als Kaschierkleber zu verkleben (Fig. 4). Dazu wird z.B. eine 15 µm dicke PE-Folie mittels ORMOCER mit einer 15 µm dicken PETP-Folie auf einer konventionellen Kaschieranlage verklebt.

### Ausführungsbeispiel 5

Die beschichteten Seiten zweier mit SiOₓ bedampfter je 20 µm dicker BOPP-Folien (eine Folie aus PP-Homopolymer und die andere eine siegelfähige Dreischicht-Folie) werden mit ORMOCER als Kaschierkleber auf einer konventionellen Kaschieranlage verklebt. Der so erhaltene Verbund ist siegelfähig und nahezu sortenrein, d.h. er enthält abgesehen von den dünnen Barriereschichten nur Polypropylen als Polymer.

Selbstverständlich sind erfindungsgemäße Verwendung von Verbundsysteme nicht auf Folien beschränkt. Auch Platten, Form- und Hohlkörper, Membranen, Schutzschichten für Sensoren oder andere Medien, welche eine gute Barrierewirkung gegenüber Gasen und Wasserdampf aufweisen sollen, bieten sich als Trägermedien für eine Beschichtung zur erfindungsgemäßen Verwendung an.

Neben Polymeren können zur erfindungsgemäßen Verwendung Barriereschichten auch auf Pappe, Papier, beschichteter Pappe oder beschichtetem Papier aufgebracht werden. Beispielsweise kann auf Pappe oder Papier zuerst eine ORMOCER-Grundschicht und anschließend eine Metall oder Metalloxidschicht aufgebracht werden. Als mechanische Schutzschicht würde sich darauf wiederum eine abschließende ORMOCER-Schicht eignen. Auch kann mit einer ORMOCER-Schicht kaschiertes Papier gegen die bedampfte Seite einer Trägerfolie eingesetzt werden.

## Patentansprüche

1. Verwendung eines Verbundsystems aus einem Trägermaterial und mindestens zwei auf dem Trägermaterial angeordneten Schichten, von denen mindestens eine eine Barriereschicht ist,
diese mindestens eine Barriereschicht
anorganisch-organische Hybridpolymere enthält (ORMOCER-Schicht) und mindestens eine weitere Schicht vorgesehen ist, welche entweder ein Trägermaterial enthält, wobei die ORMOCER-Schicht als Kaschierkleber zwischen den beiden Trägermaterialien angeordnet ist, oder welche eine weitere Barriereschicht ist, die ein Metall und/oder ein Metalloxid und/oder einen Halbleiter enthält, wobei die ORMOCER-Schicht unmittelbar benachbart zu der weiteren Barriereschicht angeordnet ist als Barrierematerial gegen Gase und/oder Wasserdampf.

2. Verwendung eines Verbundsystems nach Anspruch 1, **dadurch gekennzeichnet, daß** auf mindestens einer ORMOCER-Schicht, welche auf dem Trägermaterial angeordnet ist, mindestens eine weitere Barriereschicht angeordnet ist.

3. Verwendung eines Verbundsystems nach Anspruch 1, **dadurch gekennzeichnet, daß** auf mindestens einer weiteren Barriereschicht, welche auf dem Trägermaterial angeordnet ist, mindestens eine ORMOCER-Schicht angeordnet ist.

4. Verwendung eines Verbundsystems nach einem der vorhergehenden Ansprüche, **dadurch gekennzeichnet, daß** das System neben mindestens einer ORMOCER-Schicht mindestens eine weitere Barriereschicht, welche Aluminiumoxide, Magnesiumoxide, Ceroxide, Hafniumoxide, Tantaloxide, Siliziumoxide wie Siliziummonoxid oder Siliziumdioxid, Titanoxide wie Titandioxid, Titan(3)oxid oder Titanmonoxid, Yttriumoxiden, Zirkonoxiden wie Zirkonmonoxid oder Mischungen davon enthält, umfaßt.

5. Verwendung eines Verbundsystems nach einem der vorhergehenden Ansprüche, **dadurch gekennzeichnet, daß** die ein Metall und/oder ein Metalloxid und/oder einen Halbleiter enthaltende Barriereschicht eine Dicke zwischen 5 nm und 1000 nm aufweist.

6. Verwendung eines Verbundsystems nach einem der vorhergehenden Ansprüche, **dadurch gekennzeichnet, daß** die ORMOCER-Schicht eine Dicke zwischen 1 µm und 15 µm aufweist.

7. Verwendung eines Verbundsystems nach einem der vorhergehenden Ansprüche, **dadurch gekennzeichnet, daß** in die ORMOCER-Schicht funktionalisierte SiO₂-Partikel oder funktionalisierte Al₂O₃-Partikel eingearbeitet sind.

8. Verwendung eines Verbundsystems nach einem der vorhergehenden Ansprüche, **dadurch gekennzeichnet, daß** das Trägermaterial aus Papier, Pappe, beschichtetem Papier oder beschichteter Pappe besteht.

9. Verwendung eines Verbundsystems nach einem der Ansprüche 1 bis 7, **dadurch gekennzeichnet, daß** das Trägermaterial aus polymerem Material besteht.

10. Verwendung eines verbundsystems nach einem der Ansprüche 1 bis 7, **dadurch gekennzeichnet, daß** das Trägermaterial aus Polyamid, Polyethylen, Polypropylen oder Polyester besteht.

11. Verwendung eines Verbundsystems nach einem der Ansprüche 1 bis 7, **dadurch gekennzeichnet, daß** das Trägermaterial aus mindestens einem biologisch abbaubaren Polymer besteht.

12. Verwendung eines Verbundsystems nach einem der Ansprüche 1 bis 7, **dadurch gekennzeichnet, daß** das Trägermaterial aus mindestens einem nativen Polymer besteht.

13. Verwendung eines Verbundsystems nach einem der Ansprüche 1 bis 7, **dadurch gekennzeichnet, daß** das Trägermaterial aus Zellglas, einem stärkeoder einem eiweißhaltigen Material besteht.

14. Verwendung eines Verbundsystems nach einem der vorhergehenden Ansprüche, **dadurch gekennzeichnet, daß** das Trägermaterial Folien, Platten, Formkörper, Hohlkörper, Membranen oder Schutzschichten für Sensoren enthält.

15. Verwendung eines Verbundsystems nach einem der Ansprüche 9 bis 13, **dadurch gekennzeichnet, daß** das Trägermaterial eine Folie mit einer Dicke zwischen 5 µm und 2 mm ist.

16. Verwendung eines Verbundsystems nach Anspruch 15, **dadurch gekennzeichnet, daß** das Trägermaterial aus einem orientierten Polymer besteht.

17. Verwendung eines Verbundsystems nach einem der vorhergehenden Ansprüche, **dadurch gekennzeichnet, daß** das Trägermaterial siegelfähig ist und/oder mit einer siegelfähigen Schicht versehen ist.

## Claims

1. Use of a composite system consisting of a base material and at least two layers arranged on the base material, of which at least one is a barrier layer, this latter containing at least one barrier layer inorganic-organic hybrid polymers (ORMOCER layer), and there is at least one further layer which either contains a base material, the ORMOCER layer being arranged as a laminated adhesive between the two base materials, or which is an additional barrier layer that contains a metal and/or a metallic oxide and/or a semiconductor, the ORMOCER layer being positioned directly adjacent to the additional barrier layer as a barrier material against gases and/or water vapour.

2. Use of a composite system as in Claim 1,
**characterised in that**,
on at least one ORMOCER layer that is positioned on the base material, there is arranged at least one additional barrier layer.

3. Use of a composite system as in Claim 1,
**characterised in that**,
on at least one additional barrier layer that is positioned on the base material, there is arranged at least one ORMOCER layer.

4. Use of a composite system as in one of the preceding Claims,
**characterised in that**
the system comprises, in addition to at least one ORMOCER layer, at least one further barrier layer that contains aluminium oxides, magnesium oxides, cerium oxides, hafnium oxides, tantalum oxides, silicon oxides such as silicon monoxide or silicon dioxide, titanium oxides such as titanium dioxide, titanium(III) oxide or titanium monoxide, yttrium oxides, zircon oxides such as zircon monoxide, or mixtures of these.

5. Use of a composite system as in one of the preceding Claims,
**characterised in that**
the barrier layer that contains a metal and/or a metallic oxide and/or a semiconductor has a thickness of between 5 nm and 1000 nm.

6. Use of a composite system as in one of the preceding Claims,
**characterised in that**
the ORMOCER layer has a thickness of between 1 µm and 15 µm.

7. Use of a composite system as in one of the preceding Claims,
**characterised in that**
functionalised SiO₂ particles or functionalised Al₂O₃ particles are incorporated into the ORMOCER layer.

8. Use of a composite system as in one of the preceding Claims,
**characterised in that**
the base material consists of paper, card, coated paper or coated card.

9. Use of a composite system as in one of Claims 1 to 7,
**characterised in that**
the base material consists of polymer material.

10. Use of a composite system as in one of Claims 1 to 7,
**characterised in that**
the base material consists of polyamide, polyethylene, polypropylene or polyester.

11. Use of a composite system as in one of Claims 1 to 7,
**characterised in that**
the base material consists of at least one biodegradable polymer.

12. Use of a composite system as in one of Claims 1 to 7,
**characterised in that**
the base material consists of at least one native polymer.

13. Use of a composite system as in one of Claims 1 to 7,
**characterised in that**
the base material consists of cellulose film, or of a material containing starch or protein.

14. Use of a composite system as in one of the preceding Claims,
**characterised in that**
the base material contains films, panels, moulded bodies, hollow bodies, membranes or protective layers for sensors.

15. Use of a composite system as in one of Claims 9 to 13,
**characterised in that**
the base material is a film with a thickness of between 5 µm and 2 mm.

16. Use of a composite system as in Claim 15,
**characterised in that**
the base material consists of an oriented polymer.

17. Use of a composite system as in one of the preceding Claims,
**characterised in that**
the base material is sealable and/or has a sealable layer.

## Revendications

1. Utilisation d'un système composite composé d'un matériau de support et d'au moins deux couches disposées sur le matériau de support, parmi lesquelles au moins une est une couche barrière, cette couche barrière, au moins au nombre de une, contenant des polymères hybrides inorganiques-organiques (couche ORMOCER) et au moins une autre couche étant prévue, qui soit contient un matériau de support, auquel cas la couche ORMOCER est alors disposée entre les deux matériaux de support en tant que colle de contre-collage, soit est une autre couche barrière qui contient un métal et/ou un oxyde métallique et/ou un semi-conducteur, la couche ORMOCER étant disposée pour être directement adjacente à l'autre couche barrière en tant que matériau barrière contre des gaz et/ou de la vapeur d'eau.

2. Utilisation d'un système composite selon la revendication 1, **caractérisée en ce qu'**au moins une autre couche barrière est disposée sur au moins une couche ORMOCER qui est disposée sur le matériau de support.

3. Utilisation d'un système composite selon la revendication 1, **caractérisée en ce qu'**est disposée au moins une couche ORMOCER sur au moins une autre couche barrière qui est disposée sur le matériau de support.

4. Utilisation d'un système composite selon l'une des revendications précédentes, **caractérisée en ce que** le système, en plus d'au moins une couche ORMOCER, comprend au moins une autre couche barrière qui contient des oxydes d'aluminium, des oxydes de magnésium, des oxydes de cérium, des oxydes d'hafnium, des oxydes de tantale, des oxydes de silicium, tels que le monoxyde de silicium ou le dioxyde de silicium, des oxydes de titane tels que le dioxyde de titane, l'oxyde de titane (3) ou le monoxyde de titane, des oxydes d'yttrium, des oxydes de zirconium tel que le monoxyde de zirconium, ou leurs mélanges.

5. Utilisation d'un système composite selon l'une des revendications précédentes, **caractérisée en ce que** la couche barrière qui contient un métal et/ou un oxyde métallique et/ou un semi-conducteur présente une épaisseur comprise entre 5 nm et 1 000 nm.

6. Utilisation d'un système composite selon l'une des revendications précédentes, **caractérisée en ce que** la couche ORMOCER présente une épaisseur comprise entre 1 µm et 15 µm.

7. Utilisation d'un système composite selon l'une des revendications précédentes, **caractérisée en ce que** sont incorporées dans la couche ORMOCER des particules de SiO₂ fonctionnalisées ou des particules de Al₂O₃ fonctionnalisées.

8. Utilisation d'un système composite selon l'une des revendications précédentes, **caractérisée en ce que** le matériau de support se compose de papier, de carton, de papier enduit ou de carton enduit.

9. Utilisation d'un système composite selon l'une des revendications 1 à 7, **caractérisée en ce que** le matériau de support se compose d'un matériau polymère.

10. Utilisation d'un système composite selon l'une des revendications 1 à 7, **caractérisée en ce que** le matériau de support se compose de polyamide, de polyéthylène, de polypropylène ou de polyester.

11. Utilisation d'un système composite selon l'une des revendications 1 à 7, **caractérisée en ce que** le matériau de support se compose d'au moins un polymère biologiquement dégradable.

12. Utilisation d'un système composite selon l'une des revendications 1 à 7, **caractérisée en ce que** le matériau de support se compose d'au moins un polymère natif.

13. Utilisation d'un système composite selon l'une des revendications 1 à 7, **caractérisée en ce que** le matériau de support se compose de cellophane, d'un matériau contenant de l'amidon ou d'un matériau contenant de l'albumine.

14. Utilisation d'un système composite selon l'une des revendications précédentes, **caractérisée en ce que** le matériau de support contient des feuilles, des plaques, des corps moulés, des corps creux, des membranes ou des couches de protection pour capteurs.

15. Utilisation d'un système composite selon l'une des revendications 9 à 13, **caractérisée en ce que** le matériau de support est une feuille présentant une épaisseur comprise entre 5 µm et 2 mm.

16. Utilisation d'un système composite selon la revendication 15, **caractérisée en ce que** le matériau de support se compose d'un polymère orienté.

17. Utilisation d'un système composite selon l'une des revendications précédentes, **caractérisée en ce que** le matériau de support peut être scellé et/ou est pourvu d'une couche pouvant être scellée.
